# EUROPÄISCHE PATENTSCHRIFT

(11) **EP 4 047 254 B1**
(45) Veröffentlichungstag und Bekanntmachung des Hinweises auf die Patenterteilung: **17.07.2024**
(21) Anmeldenummer: 22157723.2
(22) Anmeldetag: 21.02.2022
(51) Int. Cl.: F16L 23/18, F16L 25/02, F16J 15/06, F16J 15/12

(54) **FLANSCHVERBINDUNG, FLANSCHDICHTUNG UND VERFAHREN ZUM INSTALLIEREN EINER NEUEN FLANSCHDICHTUNG**
FLANGE CONNECTION, FLANGE SEAL AND METHOD FOR INSTALLING A NEW FLANGE SEAL
LIAISON PAR BRIDE, JOINT D'ÉTANCHÉITÉ À BRIDE ET PROCÉDÉ D'INSTALLATION D'UN NOUVEAU JOINT D'ÉTANCHÉITÉ À BRIDE

(30) Priorität: 23.02.2021 DE 102021104200
(43) Veröffentlichungstag der Anmeldung: 24.08.2022
(73) Patentinhaber: Strüder Rohr-, Regel- und Meßanlagen GmbH, 08289 Schneeberg (DE)
(72) Erfinder: Fiedler, Andreas, 09350 Lichtenstein (DE)
(74) Vertreter: Steiniger, Carmen

(56) Entgegenhaltungen:
- EP-B1- 1 965 117
- US-A- 3 215 166
- US-A- 4 787 654

## Beschreibung

Die vorliegende Erfindung betrifft eine Flanschverbindung mit zwei miteinander verschraubten Flanschteilen, wobei wenigstens eines der Flanschteile auf seiner dem gegenüberliegend angeordneten Flanschteil zugewandten Seite einen Rücksprung aufweist, wobei zwischen den Flanschteilen eine Flanschdichtung mit wenigstens einem Ausgleichsring angeordnet ist, und wobei der jeweilige Ausgleichsring in wenigstens einer seiner Oberflächen eine ringförmige Nut aufweist, in die wenigstens ein Dichtring eingebracht ist, wobei der wenigstens eine Ausgleichsring an einer zu einer Mittelachse der Flanschverbindung ausgerichteten Innenseite des Rücksprunges anliegt.

Darüber hinaus betrifft die vorliegende Erfindung ein Verfahren zum Ausbilden einer Flanschverbindung.

Insbesondere in Gasdruckregelanlagen sind Isolierstücke zur elektrischen Trennung von Ein- und Ausgangsleitung vorgeschrieben. Zur elektrischen Isolation der Ein- und Ausgangsleitung wurden in der Vergangenheit oftmals Flanschteile mit Rücksprung gemäß DIN 2513 Form R13 verwendet, zwischen welchen eine Isolierscheibe vorgesehen ist. Aufgrund verschiedener Einflussfaktoren ändern sich nach einer gewissen Betriebszeit die Stoffeigenschaften der verwendeten Isolierscheiben. Dadurch kann es zu einem verstärkten Gasaustritt kommen. Daher müssen die entsprechenden Isolierscheiben nach bestimmten Betriebszeiten ausgetauscht werden.

Die Verwendung von Flanschteilen mit Rücksprüngen macht einen Austausch der Isolierscheibe jedoch sehr schwierig. Teilweise wurden die Flanschteile vor deren erstmaligen Gebrauch bearbeitet, sodass vor dem Austausch der Isolierscheibe nicht gesagt werden kann, welche konkreten Abmessungen die Flanschteile aufweisen und welche Ersatzisolierscheibe entsprechend zu verwenden ist. Zudem zeigen sich bei den Gasdruckregelanlagen nach einer bestimmten Betriebsdauer Setzungserscheinungen, welche den Einbau der verfügbaren Isolierscheiben schwierig bis unmöglich machen. Oftmals führt dies dazu, dass nicht allein die Isolierscheibe ausgetauscht wird, sondern die komplette Flanschverbindung einschließlich Isolierscheibe, was neben einem enormen Arbeitsaufwand auch vergleichsweise hohe Kosten mit sich bringt.

Aktuell werden zunehmend Isolierflanschverbindungen ohne Rücksprung an den Flanschteilen verwendet. Eine derartige Isolierflanschverbindung ist beispielsweise in der Druckschrift DE 10 2013 202 787 B4 beschrieben. Diese Isolierflanschverbindung weist zwei Flanschteile mit dazwischen vorgesehener Isolierdichtung auf. Die Isolierdichtung weist eine Flanschisolierung und ein Dichtelement auf. Die Flanschteile werden durch Verbindungsmittel zusammengehalten.

Eine weitere Flanschverbindung ist in der Druckschrift DE 10 2008 014 218 A1 beschrieben. Bei dieser Flanschverbindung wird zwischen den Flanschteilen ein keramischer Dichtring eingesetzt.

Die Druckschrift DE 28 28 076 A1 beschreibt eine Flanschverbindung mit zwei miteinander verschraubten Flanschteilen. Zwischen den Flanschteilen ist eine Zentrierisolieranlaufscheibe angeordnet, welche in ihren Stirnflächen jeweils eine Nut aufweist, in die jeweils ein Runddichtring eingebracht ist.

Aus der Druckschrift EP 1 965 117 B1 ist eine Flanschverbindung bekannt, bei welcher ein Vorschweißbund und ein Apparate- oder Festflansch miteinander verschraubt sind. Zwischen diesen Teilen sind eine zentrale Axialdichtung und ein Ausgleichsring angeordnet. Der Ausgleichsring weist eine umlaufende Feder oder Rippe auf, mit der er in einer dazu formkonformen Nut des Vorschweißbundes liegt, wobei radial außen in der Nut, zwischen dem Ausgleichsring und dem Vorschweißbund ein O-Ring als Radialdichtung aufgenommen ist.

Die Druckschrift US 3 215 166 A beschreibt eine Flanschverbindung zwischen einem Gehäuseflansch und einem Flansch, die jeweils mit einem Rohr verschweißt und durch Schrauben miteinander verbunden sind. In eine dem Flansch gegenüber befindliche Aussparung des Gehäuseflanschs ist ein ringförmiger Kolben eingesetzt, der in der Aussparung mittels Schrauben axial in seiner Position veränderbar ist. Umfangsseitig des Kolbens ist eine Ringdichtung vorgesehen. An ihren einander gegenüberliegenden Flächen weisen der Kolben und der Flansch einander gegenüberliegende, ringförmige Nuten auf, in welchen eine Ringdichtung platziert ist.

In der Druckschrift US 4 787 654 A ist eine Flanschverbindung zwischen zwei Flanschen offenbart, die jeweils mit einem Kanalrohr verschweißt und mittels Schrauben verbunden sind. Einer der Flansche weist eine Aussparung auf, in welcher zwischen den Flanschen eine Dichtung liegt, auf welche ein in den verbundenen Kanalrohren befindlicher Druck wirkt.

Es ist die Aufgabe der vorliegenden Erfindung, eine Flanschverbindung zur Verfügung zu stellen, bei der die Flanschdichtung trotz des Rücksprungs schnell gewechselt werden kann. Ferner ist es die Aufgabe der vorliegenden Erfindung, ein Verfahren bereitzustellen, mit dem eine neue Flanschdichtung zwischen zwei Flanschteilen, von welchen wenigstens eines einen Rücksprung aufweist, schnell installiert werden kann.

Die Aufgabe wird zum einen durch eine Flanschverbindung mit zwei miteinander verschraubten Flanschteilen gelöst, wobei wenigstens eines der Flanschteile auf seiner dem gegenüberliegend angeordneten Flanschteil zugewandten Seite einen Rücksprung aufweist, wobei zwischen den Flanschteilen eine Flanschdichtung mit wenigstens einem Ausgleichsring angeordnet ist, wobei der jeweilige Ausgleichsring in wenigstens einer seiner Oberflächen eine ringförmige Nut aufweist, in die wenigstens ein Dichtring eingebracht ist, wobei der wenigstens eine Ausgleichsring an einer zu einer Mittelachse der Flanschverbindung ausgerichteten Innenseite des Rücksprunges anliegt, und wobei in axialer Ausrichtung der Flanschverbindung zwischen den Flanschteilen eine elektrisch isolierende Isolierscheibe angeordnet und der jeweilige Ausgleichsring ist zwischen der Isolierscheibe und dem wenigstens einen den Rücksprung aufweisenden Flanschteil angeordnet, wobei der jeweilige Ausgleichsring in seiner der Isolierscheibe abgewandten Oberfläche die ringeförmige Nut aufweist, in die der wenigstens eine Dichtring eingebracht ist.

Die erfindungsgemäße Flanschverbindung ist vorzugsweise eine Flanschverbindung zwischen einer Ein- und einer Ausgangsleitung einer Gasdruckregelanlage.

Die erfindungsgemäße Flanschverbindung weist zwei sich gegenüberliegend angeordnete Flanschteile auf. Unter einem Flanschteil ist eine ringförmige Scheibe zu verstehen, welche am Ende einer Rohrleitung angebracht ist und mittels welchen Rohrleitungen miteinander verbunden werden. Bei der vorliegenden Erfindung besitzt wenigstens eines dieser Flanschteile einen ringförmig ausgebildeten Rücksprung. Unter einem Rücksprung wird vorliegend eine sich von einer dem anderen Flanschteil zugewandten Oberfläche des Flanschteils in axialer Ausrichtung des Flanschteils erstreckende Auskragung verstanden. Das zweite Flanschteil kann, je nach Ausführung der erfindungsgemäßen Flanschverbindung, wie das erste Flanschteil einen Rücksprung aufweisen.

Zwischen den Flanschteilen ist wenigstens ein Ausgleichsring vorgesehen. Die erfindungsgemäße Flanschverbindung kann entweder einen Ausgleichsring oder zwei Ausgleichsringe aufweisen.

Insofern nur ein Flanschteil der Flanschverbindung einen Rücksprung besitzt, weist die Flanschverbindung nur einen Ausgleichsring auf
Weist die erfindungsgemäße Flanschverbindung zwei Flanschteile mit Rücksprung auf, hat die erfindungsgemäße Flanschverbindung zwei Ausgleichsringe.

Der wenigstens eine Ausgleichsring weist wenigstens eine ringförmige Nut auf, in die wenigstens ein Dichtring eingebracht ist. Die ringförmige Nut ist in einer dem anliegenden Flanschteil zugewandten Seite des Ausgleichsringes eingebracht. Die Abmessungen der Nut sind entsprechend dem jeweiligen Anwendungsfall der erfindungsgemäßen Flanschverbindung auszuwählen. Der wenigstens eine Ausgleichsring kann auch mehrere Nuten aufweisen, die entweder alle in der gleichen Seite des Ausgleichsringes ausgebildet sind oder aber in unterschiedlichen Seiten des Ausgleichsringes eingebracht sind. Vorzugsweise ist in jede Nut ein einziger Dichtring eingebracht. Es ist aber auch nicht ausgeschlossen, dass sich in einer Nut mehrere Dichtringe oder ein Dichtring und ein weiteres, anders ausgestaltetes Dichtmittel befinden. Als Dichtring wird vorzugsweise ein O-Ring verwendet.

Durch das Einbringen des wenigstens einen Dichtringes in die Nut des wenigstens einen Ausgleichsrings ist dieser weitestgehend vor Umwelteinflüssen geschützt, wodurch er lange Zeit weitestgehend seine Eigenschaften beibehält und nicht ausgetauscht werden muss.

Der wenigstens eine Ausgleichsring ist bevorzugt als Ringscheibe ausgebildet, wobei diese vorteilhafterweise aus Metall ausgebildet ist. Der wenigstens eine Ausgleichsring kann so problemlos mit beliebigen Abmessungen, insbesondere mit verschiedenen Höhen, hergestellt werden. Die variable Ausgestaltung des wenigstens einen Ausgleichsringes ermöglicht es, dass der wenigstens eine Ausgleichsring optimal in einen oftmals nicht oder kaum veränderbaren Spalt zwischen den beiden Flanschteilen eingepasst werden kann, wodurch problemlos und schnell eine Flanschverbindung mit hoher Dichtheit ausgebildet werden kann. Die Dichtheit der Flanschverbindung wird hierbei unter anderem durch den/die jeweils verwendete(n) Dichtring(e) erreicht.

Bei der Erfindung ist zwischen den zwei Flanschteilen eine elektrisch isolierende Isolierscheibe angeordnet, welche als Ringscheibe ausgebildet ist. Hierbei entspricht ein Innendurchmesser der Isolierscheibe in etwa einem Innendurchmesser der Flanschteile. Die Isolierscheibe ist zudem vorteilhafterweise so ausgestaltet, dass sie sich in radialer Ausrichtung mindestens bis zu dem wenigstens einen Rücksprung des wenigstens einen Flanschteils erstreckt.

Bevorzugt weist die Isolierscheibe einen Isolierdichtring und wenigstens einen in den Isolierdichtring eingebrachten Dichtring auf. Der Isolierdichtring kann beispielsweise aus glasgewebearmiertem Epoxidharz oder Polyvinylchlorid ausgebildet sein. Der wenigstens eine Dichtring kann beispielsweise ein Graphit- oder Silikondichtring sein. Ferner kann die Isolierscheibe aber auch nur aus einem einzigen Ring bestehen. Die Isolierscheibe weist vorzugsweise eine Dicke zwischen 4 mm und 6 mm auf.

Der wenigstens eine Ausgleichsring ist zwischen der Isolierscheibe und jedem Flanschteil, welches einen Rücksprung aufweist, vorgesehen.

Insofern nur ein Flanschteil der Flanschverbindung einen Rücksprung besitzt, weist die Flanschverbindung nur einen Ausgleichsring auf, wobei dieser zwischen dem den Rücksprung aufweisenden Flanschteil und der Isolierscheibe angeordnet ist. Weist die Flanschverbindung zwei Flanschteile mit Rücksprung auf, ist jeweils ein Ausgleichsring zwischen einem der Flanschteile und der Isolierscheibe vorgesehen.

Es hat sich als günstig erwiesen, wenn der wenigstens eine Ausgleichsring einen an den Innendurchmesser der Isolierscheibe und/oder der Flanschteile angepassten Innendurchmesser aufweist und sich in radialer Ausrichtung zumindest teilweise bis zu dem wenigstens einen Rücksprung des wenigstens einen Flanschteils erstreckt, sodass der wenigstens eine Ausgleichsring durch den wenigstens einen Rücksprung in seiner Position gehalten wird.

Durch die Verwendung der Isolierscheibe und des wenigstens einen variabel ausbildbaren Ausgleichsringes können flexibel und schnell unterschiedlich große Spaltgrößen zwischen zwei Flanschteilen überbrückt werden, wobei zugleich eine gute Isolation zwischen den beiden Flanschteilen und eine gute Dichtheit der Flanschverbindung gewährleistet werden kann. Die Isolationswirkung wird ausnahmslos durch die eingesetzte Isolierscheibe mit dem zugehörigen Isoliersatz, der Schraubenbolzen, Unterlegscheiben und Muttern aufweist, erreicht. Der oder die Ausgleichsring(e) dient/dienen nicht der elektrischen Isolation.

Zum Verbinden der beiden Flanschteile miteinander weisen die Flanschteile gleich ausgebildete, koaxial zueinander ausgerichtete Durchgangsöffnungen auf, in welche Verbindungsmittel, beispielsweise Schrauben, einbringbar bzw. eingebracht sind.

In einer bevorzugten Ausführungsform der erfindungsgemäßen Flanschverbindung weisen einander zugewandte Oberflächen der Flanschteile Flanschaußendurchmesser auf, die kleiner oder gleich einem Scheibenaußendurchmesser der Isolierscheibe sind, und die Flanschteile und die Isolierscheibe weisen jeweils um den jeweils dazwischen befindlichen Ausgleichsring angeordnete und einander zugeordnete Durchgangsöffnungen auf. Der bzw. die Ausgleichsring(e) können aber auch über das gesamte Flanschteil hinausreichen.

Auf diese Weise können die beiden Flanschteile mittels der neu eingebrachten Isolierscheibe optimal elektrisch voneinander isoliert werden. Zudem können durch die Durchgangsöffnungen der Flanschteile durchgeführte Verbindungsmittel, wie beispielsweise Schrauben, zugleich durch die Durchgangsöffnungen der Isolierscheibe geführt und nachfolgend vorzugsweise durch Verschrauben fixiert werden, wodurch nicht nur die Flanschteile miteinander verbunden werden, sondern auch die Isolierscheibe in ihrer Position zwischen den Flanschteilen fixiert wird.

Die Durchgangsöffnungen der Isolierscheibe weisen vorzugsweise gleiche Durchmesser wie die Durchgangsöffnungen der Flanschteile auf und sind in Anzahl und Position vorzugsweise identisch zu den Durchgangsöffnungen der Flanschteile. Ebenso ist es jedoch auch denkbar, dass die Isolierscheibe einen kleineren Außendurchmesser als die Flanschteile aufweist, wobei hierbei lediglich in den Flanschteilen Durchgangsöffnungen eingebracht sind.

Der wenigstens eine Ausgleichsring weist vorzugsweise keine Durchgangsöffnungen auf und besitzt bevorzugt einen kleineren Außendurchmesser als die Flanschteile. Ganz besonders bevorzugt erstreckt sich der wenigstens eine Ausgleichsring in seiner radialen Ausrichtung zumindest teilweise bis zu dem Rücksprung des Flanschteils, an welchem der Ausgleichsring anliegt. Alternativ kann sich der wenigstens eine Ausgleichsring in seiner radialen Ausrichtung jedoch auch einseitig über den Rücksprung des Flanschteils hinaus erstrecken. So kann der wenigstens eine Ausgleichsring beispielsweise auf einer Seite einen Außendurchmesser aufweisen, welcher den Flanschteilaußendurchmessern und/oder dem Isolierscheibenaußendurchmesser entspricht.

Im Hinblick auf eine optimale Kräfteverteilung und eine Vermeidung einer Beschädigung der Isolierscheibe durch den wenigstens einen Ausgleichsring hat es sich als vorteilhaft erwiesen, wenn der jeweilige Ausgleichsring jeweils einen den Rücksprung übergreifenden Vorsprung aufweist. Der Vorsprung kann durch eine im Mantel des jeweiligen Ausgleichringes ausgebildete Auskragung oder Nase ausgebildet sein. Eine solche Auskragung oder Nase entsteht beispielsweise dadurch, dass der jeweilige Ausgleichsring auf seiner dem daran anliegenden Flanschteil zugewandten Seite einen geringeren Querschnitt als auf seiner der Isolierscheibe zugewandten Seite aufweist. Entsprechend weist die zu der Isolierscheibe ausgerichtete Seite des jeweiligen Ausgleichsringes einen größeren Außendurchmesser als die von der Isolierscheibe abgewandte Seite des Ausgleichsringes auf. Durch den Vorsprung wird eine Kontaktfläche zwischen der Isolierscheibe und dem Ausgleichsring vergrößert, wodurch eine Flächenpressung minimiert wird und die Gefahr einer Beschädigung der Isolierscheibe durch den Ausgleichsring reduziert wird. Zudem passt sich der Ausgleichsring gut in den durch den Rücksprung vorgegebenen Raum ein.

Der Vorsprung des wenigstens einen Ausgleichsringes kann sich über den gesamten Rücksprung oder auch nur über eine Teil des Rücksprunges des jeweiligen Flanschteils erstrecken oder über den jeweiligen Rücksprung hinausragen.

Vorteilhafterweise ist der jeweilige Ausgleichsring einstückig ausgebildet, also aus einem einzigen Werkstoff und einem einzigen aus diesem Werkstoff bestehenden Teil ausgebildet. Dies ist nicht nur hinsichtlich dessen Montage von Vorteil, sondern auch hinsichtlich der Dichtheit der den Ausgleichsring aufweisenden Flanschverbindung. Zudem ist ein einstückiger Ausgleichsring auch schnell und kostengünstig herstellbar. Bevorzugt ist der wenigstens eine Ausgleichsring ein Drehteil, kann jedoch auch ein Gussteils sein. Eine Ausgestaltung als Drehteil ermöglicht eine schnelle und kostengünstige Herstellung des Ausgleichsringes und bietet zudem die Möglichkeit, problemlos Ausgleichsringe mit unterschiedlichen Abmessungen auszubilden. Alternativ könnte der wenigstens eine Ausgleichsring jedoch auch durch Pressen, mittels 3D-Druck oder durch ein anders geeignetes Fertigungsverfahren hergestellt werden. Zudem ist es auch denkbar, dass der wenigstens eine Ausgleichsring nicht einstückig ausgebildet ist, sondern aus einzelnen Komponenten zusammengesetzt ist.

Vorzugsweise erstreckt sich der wenigstens eine Ausgleichsring in seiner radialen Ausrichtung bis zu dem Rücksprung des Flanschteils oder erstreckt sich einseitig über den Rücksprung des Flanschteils hinaus.

Die bei der erfindungsgemäßen Flanschverbindung verwendete Flanschdichtung dient einem dichtenden Verbinden von zwei Flanschteilen. Der wenigstens eine Ausgleichsring ist vorzugsweise aus Metall in Form einer Ringscheibe ausgebildet. Abmessungen des wenigstens einen Ausgleichsringes, insbesondere dessen Innen- und Außendurchmesser sowie dessen Höhe, sind anwendungsfallspezifisch zu wählen.

Zum Abdichten einer mittels der Flanschdichtung hergestellten Flanschverbindung ist in dem wenigstens einem Ausgleichsring wenigstens eine ringförmige Nut eingebracht. Die wenigstens eine Nut ist jeweils in einer dem oder den angrenzenden Flanschteil zugewandten Seite des Ausgleichsringes ausgebildet. In jede ringförmige Nut ist wenigstens ein Dichtring eingebracht. Der Dichtring ist durch sein Einbringen in die Nut gegenüber Umwelteinflüssen weitestgehend geschützt, wodurch dessen Funktionsfähigkeit lange aufrechterhalten werden kann. Die Ausgestaltung der Nut, insbesondere deren Abmessungen sind anwendungsfallspezifisch zu wählen.

Bei dieser Ausführungsform weist die Flanschdichtung eine als Ringscheibe ausgebildete Isolierscheibe auf, an deren einer Seite ein parallel zu der Isolierscheibe angeordneter Ausgleichsring angeordnet ist. Der Ausgleichsring ist koaxial zu der Isolierscheibe vorgesehen, wobei ein Innendurchmesser des Ausgleichsringes vorzugsweise, aber nicht unbedingt einem Innendurchmesser der Isolierscheibe entspricht.

Die wenigstens eine Nut und damit auch der jeweilige Dichtring sind bei dieser Ausführungsform jeweils in einer der Isolierscheibe abgewandten Seite des jeweiligen Ausgleichsringes eingebracht.

In einer alternativen Ausführungsform dieser Flanschdichtung ist beidseitig der Isolierscheibe ein Ausgleichsring angeordnet, wobei die beiden Ausgleichsringe koaxial zu der Isolierscheibe vorgesehen sind.

Das Anbringen wenigstens eines entsprechend variabel ausbildbaren Ausgleichsringes an der Isolierscheibe bietet den Vorteil, dass durch die erfindungsgemäße Flanschdichtung schnell und einfach Flanschteile miteinander verbunden werden können, auch wenn sie einen Rücksprung aufweisen. Durch die variable Ausgestaltungsmöglichkeit des wenigstens einen Ausgleichsringes können Flanschteile unabhängig von einer Größe eines zwischen den Flanschteilen ausgebildeten Spaltes optimal und schnell durch die erfindungsgemäße Flanschdichtung miteinander verbunden werden.

In einer besonders günstigen Ausführungsform der Flanschdichtung weist die Isolierscheibe einen größeren Scheibenaußendurchmesser als der wenigstens eine Ausgleichsring und in einem den jeweiligen Ausgleichsring überragenden Außenrandbereich Durchgangsöffnungen auf. In die in einem Randbereich der Isolierscheibe vorgesehenen Durchgangsöffnungen können Verbindungsmittel, wie Schrauben, die vorzugsweise auch durch Randbereiche der zu verbindenden Flanschteile geführt sind, eingebracht werden. Dadurch kann die Isolierscheibe in ihrer Position fixiert werden. Hierzu sind die Durchgangsöffnungen in der Isolierscheibe vorzugsweise koaxial zu Durchgangsöffnungen der Flanschteile angeordnet und weisen vorzugsweise den gleichen Durchmesser wie die Durchgangsöffnungen der Flanschteile auf.

Als günstig hat es sich auch erwiesen, wenn der wenigstens eine Ausgleichsring einen an die Isolierscheibe angrenzenden, sich in radialer Richtung des Ausgleichsringes erstreckenden Vorsprung aufweist. Ein derartiger Vorsprung verläuft vorzugsweise entlang einer Mantelfläche des jeweiligen Ausgleichsringes. Ein solcher Vorsprung bewirkt eine gute Kräfteverteilung, wodurch die Gefahr einer Beschädigung der Isolierscheibe durch den wenigstens einen Ausgleichsring minimiert werden kann. Zudem kann durch den Vorsprung der jeweilige Ausgleichsring gut in einen durch den jeweiligen Vorsprung gebildeten Innenbereich eingepasst werden.

Für eine vorteilhafte Handhabung und Fertigung des wenigstens einen Ausgleichsringes ist es günstig, wenn der wenigstens eine Ausgleichsring einstückig, also aus einem Materialstück, ausgebildet ist. Besonders bevorzugt ist der wenigstens eine Ausgleichsring als Drehteil ausgebildet, kann aber auch ein Gussteil sein. Grundsätzlich kann der wenigstens eine Ausgleichsring auch aus mehreren Teilen und/oder mehreren Materialien bestehen.

Die Aufgabe wird zudem durch ein Verfahren zum Ausbilden einer erfindungsgemäßen Flanschverbindung gelöst, wobei das Verfahren ein Installieren einer neuen Flanschdichtung an einer Flanschverbindung mit zwei miteinander verschraubten Flanschteilen, wobei wenigstens eines der Flanschteile auf seiner dem gegenüberliegend angeordneten Flanschteil zugewandten Seite einen Rücksprung aufweist, und einer in axialer Ausrichtung der Flanschverbindung zwischen den Flanschteilen und in radialer Ausrichtung der Flanschverbindung zwischen dem wenigstens einen Rücksprung angeordneten, elektrisch isolierenden Altisolierscheibe aufweist, wobei die Flanschteile in axialer Richtung auseinander gespreizt werden; die Altisolierscheibe entnommen wird; in eine ringförmige Nut wenigstens eines Ausgleichsringes ein Dichtring eingebracht wird; an dem wenigstens einen den Rücksprung aufweisenden Flanschteil der jeweilige Ausgleichsring, einschließlich des jeweiligen Dichtringes, platziert wird, wobei der jeweilige Ausgleichsring mit seiner Oberfläche, in die jeweils der Dichtring eingebracht ist, in der radialen Ausrichtung der Flanschverbindung zumindest teilweise zwischen dem Rücksprung direkt an dem Flanschteil platziert wird, wobei der Ausgleichsring in einen Bereich innerhalb des Rücksprunges eingebracht wird, sodass der Ausgleichsring an einer zu einer Mittelachse der Flanschverbindung ausgerichteten Innenseite des Rücksprunges anliegt, und wobei wenigstens eine elektrisch isolierende Neuisolierscheibe zwischen die Flanschteile eingebracht wird, wobei die Neuisolierscheibe der Isolierscheibe der erfindungsgemäßen Flanschverbindung entspricht.

Das erfindungsgemäße Verfahren ermöglicht es, insbesondere bei einer Flanschverbindung, bei der wenigstens eines der miteinander zu der Flanschverbindung verbundenen Flanschteile einen Rücksprung aufweist, schnell und einfach eine alte Flanschdichtung durch eine neue Flanschdichtung zu ersetzen. Hierbei spielt insbesondere die Breite eines zwischen den zwei Flanschteilen vorhandenen Spaltes kaum eine Rolle, da es die Verwendung wenigstens eines flexibel ausgestaltbaren Ausgleichsringes ermöglicht, ohne weiteres unterschiedliche Spaltbreiten zu überbrücken.

Erfindungsgemäß werden zum Entfernen oder Austauschen der alten Flanschdichtung zunächst die beiden Flanschteile der Flanschverbindung in axialer Richtung der Flanschverbindung auseinander gespreizt. Weisen die beiden Flanschteile einen genügend großen Abstand zueinander auf, wird die Altisolierscheibe entnommen.

Vor oder nach dem Aufspreizen der beiden Flanschteile und der Entnahme der Altisolierscheibe wird der wenigstens eine Ausgleichsring auf dessen Einsatz vorbereitet. Hierzu wird in die wenigstens eine in dem Ausgleichsring vorgesehene Nut wenigstens ein Dichtring eingebracht.

An jedem Flanschteil, welches einen Rücksprung aufweist, wird ein solcher, jeweils den wenigstens einen Dichtring aufweisender Ausgleichsring angebracht. Der jeweilige Ausgleichsring wird hierbei so an dem jeweiligen Flanschteil angeordnet, dass dieser mit seiner den wenigstens einen Dichtring aufweisenden Seite an das jeweilige Flanschteil angrenzt.

Bei dem erfindungsgemäßen Verfahren wird eine Neuisolierscheibe zwischen den Ausgleichsringen angeordnet. Dies kann insbesondere bei Flanschverbindungen, die zwei Flanschteile mit Rücksprung aufweisen, so erfolgen, dass erst die beiden Ausgleichsringe an den jeweiligen Flanschteilen positioniert werden und nachfolgend die Neuisolierscheibe zwischen die Ausgleichsringe gebracht wird, oder dass erst einer der Ausgleichsringe an einem der Flanschteile positioniert wird, dann die Neuisolierscheibe eingelegt wird und danach der zweite Ausgleichsring zwischen der Neuisolierscheibe und dem anderen Flanschteil eingebracht wird.

In bestimmten Ausführungsformen der Erfindung kann die Neuisolierscheibe aber auch weggelassen werden. Dies ist insbesondere dann möglich, wenn zwischen den Flanschteile ein Ausgleichsring mit mit beidseitig darin eingebrachten Dichtringen verwendet wird.

Letztlich werden die beiden Flanschteile wieder miteinander verbunden.

Je nach Ausführungsform des erfindungsgemäßen Verfahrens kann die Reihenfolge der einzelnen Verfahrensschritte variiert werden.

In einer bevorzugten Ausführungsform des erfindungsgemäßen Verfahrens werden/wird dann, wenn beide Flanschteile jeweils auf ihrer dem gegenüberliegend angeordneten Flanschteil zugewandten Seite den Rücksprung aufweisen, die Flanschteile in axialer Richtung auseinander gespreizt; die Altisolierscheibe entnommen; zwei Ausgleichsringe verwendet; in die jeweilige ringförmige Nut der Ausgleichsringe jeweils ein Dichtring eingebracht; an den Flanschteilen jeweils einer der Ausgleichsringe, einschließlich des jeweiligen Dichtringes, platziert, wobei die Ausgleichsringe jeweils mit ihrer Oberfläche, in die der jeweilige Dichtring eingebracht ist, in der radialen Ausrichtung der Flanschverbindung zumindest teilweise jeweils zwischen den Rücksprüngen an den Flanschteilen platziert werden.

Bei dem Verfahren wird eine Neuisolierscheibe zwischen die Flanschteile eingebracht.

In einer anderen, ebenfalls für bestimmte Anwendungszwecke vorteilhaften Ausführungsform wird dann, wenn beide Flanschteile jeweils auf ihrer dem gegenüberliegend angeordneten Flanschteil zugewandten Seite den Rücksprung aufweisen, eines dieser Flanschteile nach der Entnahme der Altisolierscheibe und vor Einbringung der Neuisolierscheibe abgetrennt und an dessen Stelle ein Neuflanschteil, das auf seiner dem gegenüberliegend angeordneten Flanschteil zugewandten Seite keinen Rücksprung aufweist, geschweißt. Hierbei wird nur ein Ausgleichsring verwendet, wobei in die ringförmige Nut des Ausgleichsringes der Dichtring eingebracht wird; an dem den Rücksprung aufweisenden Flanschteil der Ausgleichsring, einschließlich des Dichtringes, platziert wird, wobei der Ausgleichsring mit seiner Oberfläche, in die der Dichtring eingebracht ist, in der radialen Ausrichtung der Flanschverbindung zumindest teilweise zwischen dem Rücksprung direkt an dem den Rücksprung aufweisenden Flanschteil platziert wird.

Vorzugsweise, aber nicht unbedingt wird zudem eine Neuisolierscheibe zwischen den Ausgleichsring und das auf seiner dem gegenüberliegend angeordneten Flanschteil zugewandten Seite keinen Rücksprung aufweisende Flanschteil eingebracht.

Dieses Verfahren bietet unter anderem den Vorteil, dass eine dickere Neuisolierscheibe zwischen den beiden Flanschteilen verwendet werden kann. Hierbei wird ein Abdichten zu dem Flanschteil ohne Rücksprung durch die verwendete Neuisolierscheibe erzielt.

Bevorzugte Ausführungsformen der vorliegenden Erfindung werden im Folgenden anhand von Figuren näher erläutert, wobei
- Figur 1: schematisch eine erste Ausführungsform einer erfindungsgemäßen Flanschverbindung in einem Längsschnitt zeigt;
- Figur 2: schematisch ein Detail der in Figur 1 gezeigten Ausführungsform der erfindungsgemäßen Flanschverbindung zeigt;
- Figur 3: schematisch eine zweite Ausführungsform einer erfindungsgemäßen Flanschverbindung in einem Längsschnitt zeigt;
- Figur 4: schematisch ein Detail der in Figur 3 gezeigten Ausführungsform der erfindungsgemäßen Flanschverbindung zeigt;
- Figur 5: schematisch eine dritte Ausführungsform einer erfindungsgemäßen Flanschverbindung in einem Längsschnitt zeigt;
- Figur 6: schematisch ein Detail der in Figur 5 gezeigten Ausführungsform der erfindungsgemäßen Flanschverbindung zeigt;
- Figur 7: schematisch eine andere Flanschverbindung in einem Längsschnitt zeigt; und
- Figur 8: schematisch eine weitere Flanschverbindung in einem Längsschnitt zeigt.

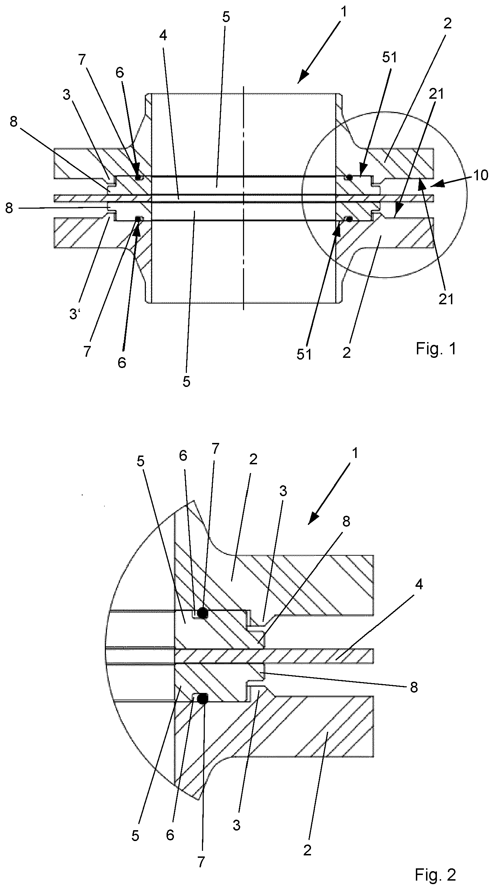

Figur 1 zeigt schematisch eine erste Ausführungsform einer erfindungsgemäßen Flanschverbindung 1 in einem Längsschnitt. Die Flanschverbindung 1 weist zwei identisch ausgebildete, koaxial zueinander angeordnete Flanschteile 2 auf. Beide Flanschteile 2 besitzen einen Rücksprung 3, welcher ringförmig ausgebildet ist und sich axialer Ausrichtung der Flanschverbindung 1 von einer ersten Seite 21 des jeweiligen Flanschteils 2 in Richtung des gegenüberliegend angeordneten Flanschteils 2 erstreckt.

An den beiden Flanschteilen 2 ist jeweils ein Ausgleichsring 5 vorgesehen. Die Ausgleichsringe 5 sind als Ringscheiben ausgebildet, wobei ein Innendurchmesser der Ausgleichsringe 5 einem Innendurchmesser der Flanschteile 2 entspricht. Die Ausgleichsringe 5 sind so ausgebildet, dass sich diese in radialer Ausrichtung wenigstens bis zu dem Rücksprung 3 des Flanschteils 2 erstrecken, an welchem sie jeweils anliegen. Ferner weisen die Ausgleichsringe 5 jeweils einen ringförmig ausgebildeten Vorsprung 8 auf, welcher sich in radialer Ausrichtung von einer Mantelfläche des jeweiligen Ausgleichsringes 5 erstreckt und den jeweiligen Rücksprung 3 übergreift. Eine derartige Ausgestaltung der Ausgleichsringe 5 bietet den Vorteil, dass diese zum einen durch die Rücksprünge 3 in ihrer Position fixiert werden und zum anderen eine Kraftübertragung auf eine zwischen den Ausgleichsringen 5 platzierte Isolierscheibe 4 verbessert werden kann.

Die Ausgleichsringe 5 sind einstückig ausgebildet, wobei diese in der gezeigten Ausführungsform jeweils als Drehteile aus Metall gefertigt sind.

In einer von der Isolierscheibe 4 weg zeigenden Seite 51 des Ausgleichsringes 5 ist jeweils eine ringförmige Nut 6 eingebracht. In der Nut 6 ist jeweils ein Dichtring 7, hier ein O-Ring, angeordnet. Durch die Dichtringe 7 wird eine Abdichtung der Flanschdichtung 10 gegenüber den Flanschteilen 2 erreicht.

In anderen, nicht gezeigten Ausführungsformen der erfindungsgemäßen Flanschverbindung 1 können die Ausgleichsringe 5 auch mehrere Nuten 6 und/oder mehrere in den Nuten 6 angeordnete Dichtringe 7 aufweisen. Auch müssen die Ausgleichsringe 5 keine Vorsprünge 8 aufweisen oder können anders ausgestaltete Vorsprünge besitzen. Ebenso können in einer alternativen Ausgestaltungsform der erfindungsgemäßen Flanschverbindung 1 auch unterschiedlich ausgebildete und nicht, wie in der gezeigten Ausführungsform, identisch ausgebildete Ausgleichsringe 5 verwendet werden. Dies kann beispielsweise dann von Vorteil sein, wenn die Flanschteile 2 nicht identisch, sondern unterschiedlich ausgebildet sind.

Die Isolierscheibe 4 weist vorzugsweise eine eigene Dichtung auf. Weist die Isolierscheibe 4 keine eigene Dichtung auf, kann der als Distanzscheibe fungierende wenigstens eine Ausgleichsring 5 auch beidseitig mit einem in einer Nut 6 eingebrachten Dichtring 7 ausgestattet sein.

Die flächig zwischen den Ausgleichsringen 5 liegende und parallel zu den Ausgleichsringen 5 angeordnete Isolierscheibe 4 dient der elektrischen Isolation der beiden Flanschteile 2. In der in Figur 1 gezeigten Ausführungsform der erfindungsgemäßen Flanschverbindung 1 weist die Isolierscheibe 4 einen gleichen Innen- und Außendurchmesser wie die Flanschteile 2 und in einem Randbereich entsprechende Durchgangsöffnungen auf. Somit können Verbindungsmittel, wie Schrauben, welche zum Verbinden der beiden Flanschteile 2 verwendet werden, zugleich durch die Isolierscheibe 4 geführt werden. Hierdurch kann ein Verrutschen und/oder Verdrehen der Isolierscheibe 4 vermieden werden. Zugleich werden durch die fest platzierte Isolierscheibe 4 auch die Ausgleichsringe 5 in ihrer Position stabilisiert.

In einer alternativen Ausführungsform der erfindungsgemäßen Flanschverbindung 1 kann die Isolierscheibe 4 jedoch auch einen kleineren Außendurchmesser als die Flanschteile 2 aufweisen. Hierbei verlaufen die Verbindungsmittel zum Verbinden der Flanschteile 2 nicht durch die Isolierscheibe 4, sondern außerhalb der Isolierscheibe 4.

Figur 2 zeigt schematisch ein Detail der in Figur 1 gezeigten Ausführungsform der erfindungsgemäßen Flanschverbindung 1, wobei gleiche wie in Figur 1 verwendete Bezugszeichen gleiche Komponenten bezeichnen.

In Figur 2 ist insbesondere die Ausgestaltung der Ausgleichsringe 5 vergrößert zu sehen. Figur 2 zeigt die in den Ausgleichsringen 5 eingebrachten Nuten 6 sowie die darin vorgesehenen Dichtringe 7 und die von den Ausgleichsringen 5 vorgesehenen Vorsprünge 8. Wie in Figur 2 gezeigt, erstrecken sich die Vorsprünge 8 über einen Großteil der Rücksprünge 3 der Flanschteile 2, wobei die Vorsprünge 8 über ihre gesamte Länge die Isolierscheibe 4 kontaktieren. Ebenso ist es auch denkbar, die Vorsprünge 8 so auszugestalten, dass sich diese über die Rücksprünge 3 hinaus erstrecken. Auch könnte auf die Vorsprünge 8 verzichtet werden, wobei dann die Ausgleichsringe 5 jeweils beidseitig den gleichen Außendurchmesser aufweisen.

Zum Installieren der Isolierscheibe 4 als Neuisolierscheibe anstelle einer ursprünglich zwischen den Flanschteilen 2 befindlichen Altisolierscheibe werden zunächst die Flanschteile 2 in axialer Richtung auseinander gespreizt. Daraufhin wird die Altisolierscheibe entnommen. Da in der gezeigten Ausführungsform beide Flanschteile 2 jeweils eine Rücksprung 3 aufweisen, kommen zwei Ausgleichsringe 5 zum Einsatz.

In die jeweilige ringförmige Nut 6 der Ausgleichsringe 5 wird jeweils ein Dichtring 7 eingebracht. Dann wird jeweils einer der Ausgleichsringe 5 einschließlich des jeweiligen Dichtringes 7 an einem der Flanschteile 2 platziert. Dabei werden die Ausgleichsringe 5 jeweils mit ihrer Oberfläche, in die der jeweilige Dichtring 7 eingebracht ist, in der radialen Ausrichtung der Flanschverbindung 1 zumindest teilweise jeweils zwischen den Rücksprüngen 3 an den Flanschteilen 2 platziert.

Ferner wird die Isolierscheibe 4 zwischen die Flanschteile 2 bzw. zwischen die Ausgleichringe 5 eingebracht.

Danach werden durch die Durchgangsöffnungen in den Flanschteilen 2 und der Isolierscheibe 4 Schrauben durchgeführt und die Flanschteile 2 unter Einsatz von auf die Schrauben aufgeschraubten Muttern verschraubt.

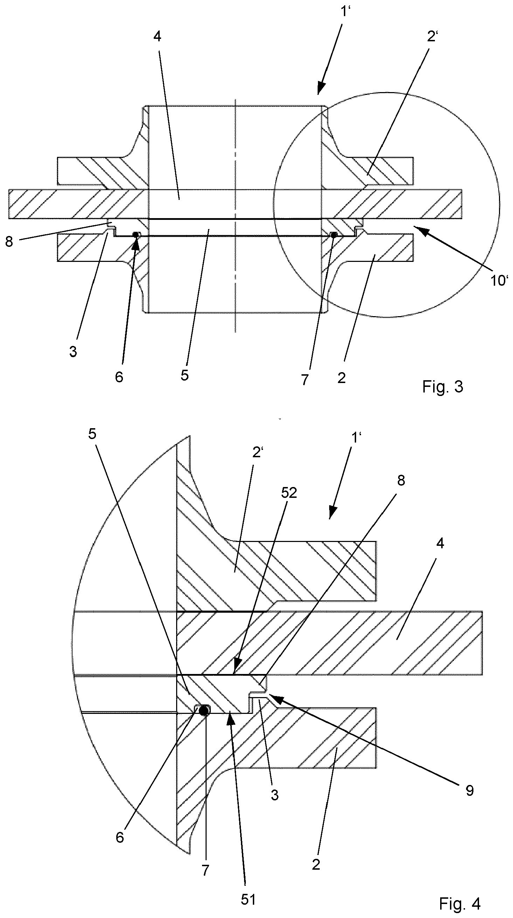

Figur 3 zeigt schematisch eine zweite Ausführungsform einer erfindungsgemäßen Flanschverbindung 1' in einem Längsschnitt, wobei Figur 4 schematisch ein Detail der dieser Flanschverbindung 1' zeigt. Die schon in den Figuren 1 und 2 verwendeten Bezugszeichen bezeichnen dabei gleiche Komponenten, wobei auf die vorherige Beschreibung zu diesen verwiesen wird.

Anders als die Flanschverbindung 1 der Figuren 1 und 2 weist die in den Figuren 3 und 4 dargestellte Flanschverbindung 1' lediglich ein Flanschteil 2 mit einem Rücksprung 3 auf. Das dem Flanschteil 2 mit dem Rücksprung 3 gegenüberliegend angeordnete Flanschteil 2' besitzt keinen Rücksprung. Der Einsatz einer so ausgestalteten Flanschverbindung 1' bietet sich insbesondere dort an, wo nur wenig Platz zwischen den beiden zu verbindenden Flanschteilen 2, 2' vorhanden ist.

An dem Flanschteil 2 mit dem Rücksprung 3 ist ein Ausgleichsring 5 angeordnet. Der Ausgleichsring 5 ist als Ringscheibe ausgebildet, wobei dessen Innendurchmesser den Innendurchmessern der Flanschteile 2, 2' entspricht. Der Ausgleichsring 5 erstreckt sich in seiner radialen Ausrichtung zumindest teilweise bis zu dem Rücksprung 3 des Flanschteils 2, sodass der Ausgleichsring 2 durch den Rücksprung 3 in seiner Position gehalten wird.

In der in den Figuren 3, 4 gezeigten Ausführungsform weist der Ausgleichsring 5 einen sich von einer Mantelfläche des Ausgleichsringes 5 in radialer Richtung des Ausgleichsringes 5 erstreckenden Vorsprung 8 auf. Der Vorsprung 8 ist an einer von dem Flanschteil 2 mit dem Rücksprung 3 weg zeigenden Seite 52 des Ausgleichsringes 5 ausgebildet.

Der Vorsprung 8 ist in dieser Ausführungsform der erfindungsgemäßen Flanschverbindung 1' so groß ausgebildet, dass dieser nahezu den kompletten Rücksprung 3 überragt und sich nahezu komplett zwischen einem zwischen der Isolierscheibe 4 und dem Rücksprung 3 ausgebildeten Spalt 9 erstreckt.

Der Vorsprung 8 dient in erster Linie dazu, die beim Verbinden der Flanschteile 2, 2' wirkenden Kräfte besser auf der Isolierscheibe 4 zu verteilen und somit ein Beschädigen der Isolierscheibe 4 durch den Ausgleichsring 5 zu vermeiden. In alternativen Ausgestaltungsformen der erfindungsgemäßen Flanschverbindung 1' kann der Ausgleichsring 5 jedoch auch ohne Vorsprung 8 ausgebildet sein oder kann der Vorsprung 8 auch andere Abmessungen und/oder eine andere Gestalt aufweisen.

In seiner Höhe, also in seiner Ausdehnung von dem Flanschteil 2 mit Rücksprung 3 bis zu dem Isolierring 4, kann der Ausgleichsring 5 variieren. Der Ausgleichsring 5 kann so optimal in einen zwischen den beiden Flanschteilen 2, 2' ausgebildeten Spalt eingepasst werden, womit eine Flanschverbindung 1' mit optimaler Dichtheit geschaffen werden kann.

Um den Ausgleichsring 5 gegenüber dem Flanschteil 2, an welchem der Ausgleichsring 5 anliegt, abzudichten, weist der Ausgleichsring 5 einen in eine Nut 6 eingebrachten Dichtring 7 auf. Die Nut 6 verläuft ringförmig in einer zu dem Flanschteil 2 ausgerichteten Seite 51, wobei die Abmessungen der Nut 6 an die Abmessungen des verwendeten Dichtringes 7 oder umgekehrt angepasst sind.

An dem Flanschteil 2' ohne Rücksprung wird eine Abdichtung der Flanschverbindung 1' durch die Isolierscheibe 4 erzeugt. Hierzu ist die Isolierscheibe 4 aus einem Isolierdichtring und wenigstens einen in dem Isolierdichtring eingebrachten Dichtring ausgebildet. Die Isolierscheibe 4 kann jedoch auch anders ausgestaltet sein.

Zwischen dem Ausgleichsring 5 und dem Flanschteil 2' ohne Rücksprung ist die als Ringscheibe ausgebildete Isolierscheibe 4 platziert. Durch die Isolierscheibe 4 werden die beiden Flanschteile 2, 2' elektrisch voneinander entkoppelt. In der in den Figuren 3, 4 gezeigten Ausführungsform weist die Isolierscheibe 4 einen größeren Außendurchmesser als die beiden Flanschteile 2, 2' auf. Der Außendurchmesser der Isolierscheibe 4 kann jedoch auch gleich den oder kleiner als die Außendurchmesser(n) der Flanschteile 2, 2' sein.

Um in der Ausführungsform der Figuren 3 und 4 die Isolierscheibe 4 als Neuisolierscheibe anstelle einer zwischen den jeweils einen Rücksprung 3 aufweisenden Flanschteilen 2 ursprünglich befindlichen Altisolierscheibe einzubringen, wird zunächst eines dieser Flanschteile 2 nach der Entnahme der Altisolierscheibe und vor Einbringung der Neuisolierscheibe abgetrennt. An die Stelle des abgetrennten Flanschteiles 2 wird das Flanschteil 2`, das auf seiner dem gegenüberliegend angeordneten Flanschteil 2 zugewandten Seite keinen Rücksprung aufweist, als Neuflanschteil geschweißt.

Hierbei wird nur ein Ausgleichsring 5 verwendet. Dabei wird in die ringförmige Nut 6 des Ausgleichsringes 5 der Dichtring 7 eingebracht. Dann wird der Ausgleichsring 5 einschließlich des Dichtringes 7 an dem den Rücksprung 3 aufweisenden Flanschteil 2 platziert, wobei der Ausgleichsring 5 mit seiner Oberfläche, in die der Dichtring 7 eingebracht ist, in der radialen Ausrichtung der Flanschverbindung 1' zumindest teilweise zwischen dem Rücksprung 3 direkt an dem den Rücksprung 3 aufweisenden Flanschteil 2 platziert wird. Dann wird die Isolierscheibe 4 als Neuisolierscheibe zwischen den Ausgleichsring 5 und das auf seiner dem gegenüberliegend angeordneten Flanschteil 2 zugewandten Seite keinen Rücksprung aufweisende Flanschteil 2' eingebracht.

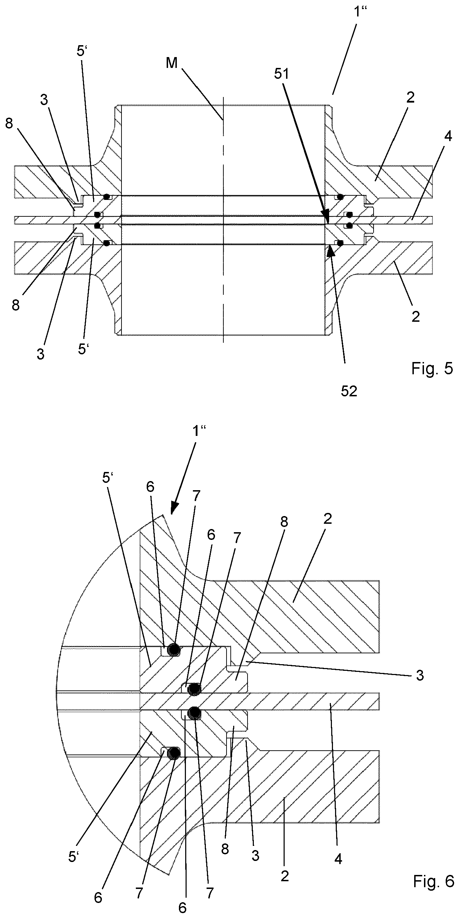

Figur 5 zeigt schematisch eine dritte Ausführungsform einer erfindungsgemäßen Flanschverbindung 1" in einem Längsschnitt. Figur 6 zeigt schematisch ein Detail der in Figur 5 gezeigten Flanschverbindung 1".

Bei der in den Figuren 5 und 6 gezeigten Flanschverbindung 1" sind zwischen zwei Flanschteilen 2 eine Isolierscheibe 4 und zwei beidseitig der Isolierscheibe 4 angeordnete Ausgleichsringe 5' eingebracht. Anders als die in den Figuren 1 bis 4 gezeigten Ausgleichsringe 5 sind in die Ausgleichsringe 5` jeweils Dichtringe 7 auf beiden Seiten des jeweiligen Ausgleichsringes 5" eingebracht.

Die Dichtringe 7 sind in jeweils eine Nut 6 eingebracht. Die Nuten 6 sind in Stirnflächen 51, 52 der Ausgleichsringe 5' vorgesehen. Als Stirnflächen 51, 52 sind hier jene Flächen der Ausgleichsringe 5' zu verstehen, welche der Isolierscheibe 4 und dem jeweils an den jeweiligen Ausgleichsring 5" angrenzenden Flanschteil 2 zugewandt sind, also keine Mantelfläche der Ausgleichsringe 5`.

In jeder Stirnfläche 51, 52 ist jeweils eine Nut 6 eingebracht, sodass jede Stirnfläche 51, 52 einen Dichtring 7 aufweist. Eine solche Anordnung der Dichtringe 7 führt zu einer sehr guten Abdichtung der Flanschverbindung 1", wobei ein ungewünschter Gas- oder Flüssigkeitsaustritt weitestgehend verhindert werden kann.

In der in den Figuren 5 und 6 gezeigten Ausführungsform der erfindungsgemäßen Flanschverbindung 1" sind jeweils die beiden an einem gemeinsamen Ausgleichsring 5' angeordneten Nuten 6 versetzt zueinander, also mit unterschiedlichen Abständen zu einer Mittelachse M der Flanschverbindung 1" angeordnet. Hierdurch kann die Gefahr einer Beschädigung des jeweiligen Ausgleichsringes 5' durch das Einbringen der Nuten 6 verringert werden. Es ist jedoch auch möglich, die entsprechenden Nuten 6 übereinander, also im gleichen Abstand zu der Mittelachse M der Flanschverbindung 1" auszubilden.

Ferner ist es auch möglich, mehr als eine Nut 6 in die jeweilige(n) Stirnfläche(n) 51, 52 einzubringen und/oder mehr als einen Dichtring 7 in einer Nut 6 vorzusehen.

Die Ausgleichsringe 5' der in den Figuren 5 und 6 gezeigten Flanschverbindung 1" weisen jeweils einen Vorsprung 8 auf, welcher sich jeweils über einen Rücksprung 3 der Flanschteile 2 erstreckt. Anstatt solcher Ausgleichsringe 5` kann auch wenigstens einer der Ausgleichsringe ohne Vorsprung 8 ausgebildet sein. Ebenso können auch Ausgleichsringe 5' mit mehreren, jeweils mit einem Dichtring 7 versehenen Nuten 6 an Flanschteilen 2' zur Anwendung kommen, welche keinen Rücksprung 3 aufweisen.

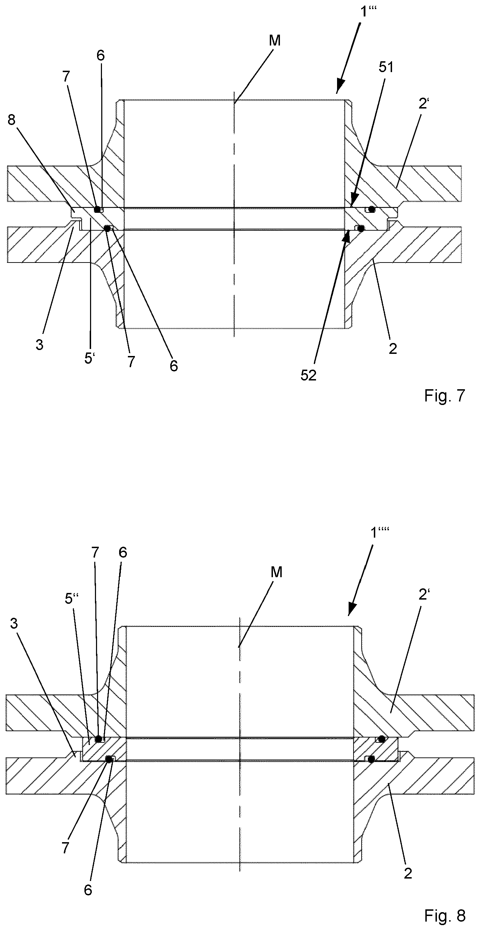

Figur 7 zeigt schematisch eine andere Flanschverbindung 1‴ in einem Längsschnitt, wobei auch hier gleiche Bezugszeichen wie in den vorangegangenen Figuren gleiche Komponenten bezeichnen.

Anders als die in den Figuren 1 bis 6 dargestellten Ausführungsformen der erfindungsgemäßen Flanschverbindung 1, 1', 1" weist die Flanschverbindung 1‴ aus Figur 7 lediglich einen einzigen Ausgleichsring 5' und keine Isolierscheibe 4 auf. Entsprechend liegt der Ausgleichsring 5` jeweils mit einer seiner Stirnflächen 51, 52 direkt an jeweils einem der Flanschteile 2, 2` an.

Zur fluiden Abdichtung der Flanschverbindung 1‴ sowie zur elektrischen Isolation der beiden Flanschteile 2, 2' voneinander ist in jeder der Stirnflächen 51, 52 des Ausgleichsringes 5` jeweils eine Nut 6 mit Dichtring 7 eingebracht. Es ist jedoch auch denkbar, dass mehrere Nuten 6 und/oder mehrere Dichtringe 7 in wenigstens eine der Stirnflächen 51, 52 eingebracht werden. Ebenso wie in dem in den Figuren 5 und 6 gezeigten Ausführungsbeispiel der erfindungsgemäßen Flanschverbindung 1" sind auch bei der Flanschverbindung 1‴ der Figur 7 die Nuten 6 und Dichtringe 7 zueinander versetzt angeordnet. Die Nuten 6 samt der Dichtungen 7 sind also mit unterschiedlichen Abständen zu der Mittelachse M in den Ausgleichsring 5' eingebracht.

Bei der Flanschverbindung 1‴ weist eines der Flanschteile 2, 2`, nämlich das Flanschteil 2, einen Rücksprung 3 auf. Der verwendete Ausgleichsring 5' ist derart ausgebildet, dass sich dieser in radialer Richtung im Wesentlichen bis zu dem Rücksprung 3 erstreckt. Der Ausgleichsring 5` liegt also an einer zu der Mittelachse M der Flanschverbindung 1‴ ausgerichteten Innenseite des Rücksprunges 3 an, wobei der Ausgleichsring 5' in einen Bereich innerhalb des Rücksprunges 3 eingebracht und durch diesen in seiner Position gehalten ist. Für eine bessere Kräfteverteilung weist der Ausgleichsring 5' zudem einen den Rücksprung 3 übergreifenden Vorsprung 8 auf.

Figur 8 zeigt schematisch eine weitere Flanschverbindung 1ʺʺ in einem Längsschnitt. Die Flanschverbindung 1ʺʺ ähnelt der in Figur 7 gezeigten Flanschverbindung 1‴. Anders als die Flanschverbindung 1‴ von Figur 7 weist der Ausgleichsring 5" der Flanschverbindung 1ʺʺ von Figur 8 jedoch keinen Vorsprung 8 auf. Der Ausgleichsring 5" der Flanschverbindung von Figur 8 weist einen gleichbleibenden Außendurchmesser auf.

Der Ausgleichsring 5" erstreckt sich in radialer Richtung der Flanschverbindung 1ʺʺ bis zu dem Rücksprung 3 des Flanschteils 2, sodass der Ausgleichsring 5" durch den Rücksprung 3 in seiner Position stabilisiert wird.

Ebenso wie in der in Figur 7 dargestellten Flanschverbindung 1‴ weist auch die in Figur 8 gezeigte Flanschverbindung 1ʺʺ lediglich einen einzigen Ausgleichsring 5" und keine Isolierscheibe 4 auf. Der verwendete Ausgleichsring 5" weist, wie der in Figur 7 gezeigte Ausgleichsring 5`, zwei zueinander axial versetzt angeordnete Nuten 6 mit Dichtringen 7 auf. Alternativ könnten die Nuten 6 mit den Dichtringen 7 jedoch auch direkt übereinander, das heißt, mit gleichem Abstand zu der Mittelachse M angeordnet werden.

## Patentansprüche

1. Flanschverbindung (1, 1', 1") mit zwei miteinander verschraubten Flanschteilen (2, 2`), wobei wenigstens eines der Flanschteile (2, 2`) auf seiner dem gegenüberliegend angeordneten Flanschteil (2, 2`) zugewandten Seite einen Rücksprung (3) aufweist, wobei zwischen den Flanschteilen (2, 2`) eine Flanschdichtung (10, 10') mit wenigstens einem Ausgleichsring (5, 5', 5") angeordnet ist, und wobei der jeweilige Ausgleichsring (5, 5', 5") in wenigstens einer seiner Oberflächen eine ringförmige Nut (6) aufweist, in die wenigstens ein Dichtring (7) eingebracht ist, wobei der wenigstens eine Ausgleichsring (5, 5', 5") an einer zu einer Mittelachse (M) der Flanschverbindung (1, 1', 1") ausgerichteten Innenseite des Rücksprunges (3) anliegt, **dadurch gekennzeichnet, dass** in axialer Ausrichtung der Flanschverbindung (1, 1', 1") zwischen den Flanschteilen (2, 2') eine elektrisch isolierende Isolierscheibe (4) angeordnet ist und der jeweilige Ausgleichsring (5, 5', 5") zwischen der Isolierscheibe (4) und dem wenigstens einen den Rücksprung (3) aufweisenden Flanschteil (2, 2`) angeordnet ist, wobei der jeweilige Ausgleichsring (5, 5', 5") in seiner der Isolierscheibe (4) abgewandten Oberfläche die ringförmige Nut (6) aufweist, in die der wenigstens eine Dichtring (7) eingebracht ist.

2. Flanschverbindung nach Anspruch 1, **dadurch gekennzeichnet, dass** einander zugewandte Oberflächen der Flanschteile (2, 2`) Flanschaußendurchmesser aufweisen, die kleiner oder gleich einem Scheibenaußendurchmesser der Isolierscheibe (4) sind und die Flanschteile (2, 2`) und die Isolierscheibe (4) jeweils um den jeweils dazwischen befindlichen Ausgleichsring (5, 5', 5") angeordnete und einander zugeordnete Durchgangsöffnungen aufweisen.

3. Flanschverbindung nach einem der vorhergehenden Ansprüche, **dadurch gekennzeichnet, dass** der jeweilige Ausgleichsring (5, 5', 5") jeweils einen den Rücksprung (3) übergreifenden Vorsprung (8) aufweist.

4. Flanschverbindung nach einem der vorhergehenden Ansprüche, **dadurch gekennzeichnet, dass** der jeweilige Ausgleichsring (5, 5', 5") einstückig ausgebildet ist.

5. Flanschverbindung (1, 1', 1") nach einem der vorhergehenden Ansprüche, **dadurch gekennzeichnet, dass** sich der wenigstens eine Ausgleichsring (5, 5', 5") in seiner radialen Ausrichtung bis zu dem Rücksprung (3) des Flanschteils (2, 2`) erstreckt oder sich einseitig über den Rücksprung (3) des Flanschteils (2, 2`) hinaus erstreckt.

6. Flanschverbindung nach Anspruch 5, **dadurch gekennzeichnet, dass** die Isolierscheibe (4) einen größeren Scheibenaußendurchmesser als der wenigstens eine Ausgleichsring (5, 5', 5") und in einem den jeweiligen Ausgleichsring (5, 5', 5") überragenden Außenrandbereich Durchgangsöffnungen aufweist.

7. Flanschverbindung nach einem der Ansprüche 5 oder 6, **dadurch gekennzeichnet, dass** der wenigstens eine Ausgleichsring (5, 5', 5") einen an die Isolierscheibe (4) angrenzenden, sich in radialer Richtung des Ausgleichsringes (5, 5', 5") erstreckenden Vorsprung (8) aufweist.

8. Verfahren zum Ausbilden einer Flanschverbindung nach einem der vorhergehenden Ansprüche, **dadurch gekennzeichnet, dass** das Verfahren ein Installieren einer neuen Flanschdichtung (10, 10`) an einer Flanschverbindung mit zwei miteinander verschraubten Flanschteilen (2, 2`), wobei wenigstens eines der Flanschteile (2, 2`) auf seiner dem gegenüberliegend angeordneten Flanschteil (2, 2`) zugewandten Seite einen Rücksprung (3) aufweist, und einer in axialer Ausrichtung der Flanschverbindung zwischen den Flanschteilen (2, 2`) und in radialer Ausrichtung der Flanschverbindung zwischen dem wenigstens einen Rücksprung (3) angeordneten, elektrisch isolierenden Altisolierscheibe aufweist, wobei die Flanschteile (2, 2`) in axialer Richtung auseinander gespreizt werden; die Altisolierscheibe entnommen wird; in eine ringförmige Nut (6) wenigstens eines Ausgleichsringes (5, 5', 5") ein Dichtring (7) eingebracht wird; an dem wenigstens einen den Rücksprung (3) aufweisenden Flanschteil (2) der jeweilige Ausgleichsring (5, 5', 5"), einschließlich des jeweiligen Dichtringes (7), platziert wird, wobei der jeweilige Ausgleichsring (5, 5', 5") mit seiner Oberfläche, in die jeweils der Dichtring (7) eingebracht ist, in der radialen Ausrichtung der Flanschverbindung zumindest teilweise zwischen dem Rücksprung (3) direkt an dem Flanschteil (2) platziert wird, wobei der Ausgleichsring (5, 5', 5") in einen Bereich innerhalb des Rücksprunges (3) eingebracht wird, sodass der Ausgleichsring (5, 5', 5") an einer zu einer Mittelachse (M) der Flanschverbindung ausgerichteten Innenseite des Rücksprunges (3) anliegt, und wobei wenigstens eine elektrisch isolierende Neuisolierscheibe (4) zwischen die Flanschteile (2, 2`) eingebracht wird, wobei die Neuisolierscheibe (4) der Isolierscheibe (4) in den vorhergehenden Ansprüchen entspricht.

9. Verfahren nach Anspruch 8, **dadurch gekennzeichnet, dass** dann, wenn beide Flanschteile (2) jeweils auf ihrer dem gegenüberliegend angeordneten Flanschteil (2) zugewandten Seite den Rücksprung (3) aufweisen, die Flanschteile (2) in axialer Richtung auseinander gespreizt werden; die Altisolierscheibe entnommen wird; zwei Ausgleichsringe (5, 5', 5") verwendet werden; in die jeweilige ringförmige Nut (6) der Ausgleichsringe (5, 5', 5") jeweils ein Dichtring (7) eingebracht wird; an den Flanschteilen (2) jeweils einer der Ausgleichsringe (5, 5', 5"), einschließlich des jeweiligen Dichtringes (7), platziert wird, wobei die Ausgleichsringe (5, 5', 5") jeweils mit ihrer Oberfläche, in die der jeweilige Dichtring (7) eingebracht ist, in der radialen Ausrichtung der Flanschverbindung (1, 1', 1") zumindest teilweise jeweils zwischen den Rücksprüngen (3) an den Flanschteilen (2) platziert werden; und die Neuisolierscheibe (4) zwischen die Flanschteile (2) eingebracht wird.

10. Verfahren nach Anspruch 9, **dadurch gekennzeichnet, dass** dann, wenn beide Flanschteile (2) jeweils auf ihrer dem gegenüberliegend angeordneten Flanschteil (2) zugewandten Seite den Rücksprung (3) aufweisen, eines dieser Flanschteile (2) nach der Entnahme der Altisolierscheibe und vor Einbringung der Neuisolierscheibe (4) abgetrennt wird und an dessen Stelle ein Neuflanschteil (2'), das auf seiner dem gegenüberliegend angeordneten Flanschteil (2) zugewandten Seite keinen Rücksprung aufweist, geschweißt wird; nur ein Ausgleichsring (5, 5', 5") verwendet wird, wobei in die ringförmige Nut (6) des Ausgleichsringes (5, 5', 5") der Dichtring (7) eingebracht wird; an dem den Rücksprung (3) aufweisenden Flanschteil (2) der Ausgleichsring (5, 5', 5"), einschließlich des Dichtringes (7), platziert wird, wobei der Ausgleichsring (5, 5', 5") mit seiner Oberfläche, in die der Dichtring (7) eingebracht ist, in der radialen Ausrichtung der Flanschverbindung (1, 1', 1") zumindest teilweise zwischen dem Rücksprung (3) direkt an dem den Rücksprung (3) aufweisenden Flanschteil (2) platziert wird; und die Neuisolierscheibe (4) zwischen den Ausgleichsring (5, 5', 5") und das auf seiner dem gegenüberliegend angeordneten Flanschteil (2) zugewandten Seite keinen Rücksprung (3) aufweisende Flanschteil (2`) eingebracht wird.

## Claims

1. Flange connection (1, 1', 1") having two flange parts (2, 2`) which are screwed together, wherein at least one of the flange parts (2, 2`) comprises a recess (3) on the side thereof that faces the opposite flange part (2, 2`), wherein a flange gasket (10, 10`) having at least one compensating ring (5, 5`, 5") is arranged between the flange parts (2, 2`), and wherein the respective compensating ring (5, 5`, 5") comprises, in at least one of its surfaces, an annular groove (6), into which at least one sealing ring (7) is inserted, wherein the at least one compensating ring (5, 5`, 5") abuts an inner side of the recess (3) which is directed to a central axis (M) of the flange connection (1, 1', 1"), **characterized in that** an electrically-insulating insulating disk (4) is arranged between the flange parts (2, 2`) in the axial orientation of the flange connection (1, 1', 1") and the respective compensating ring (5, 5`, 5") is arranged between the insulating disk (4) and the at least one flange part (2, 2`) comprising the recess (3), wherein the respective compensating ring (5, 5`, 5"), in the surface thereof that faces away from the insulating disk (4), comprises the annular groove (6), into which the at least one sealing ring (7) is inserted.

2. Flange connection according to claim 1, **characterized in that** mutually facing surfaces of the flange parts (2, 2`) have flange outer diameters which are smaller than or equal to a disk outer diameter of the insulating disk (4), and the flange parts (2, 2`) and the insulating disk (4) comprise mutually assigned through-openings which are arranged around the compensating ring (5, 5`, 5") located between them respectively.

3. Flange connection according to one of the preceding claims, **characterized in that** the respective compensating ring (5, 5`, 5") comprises a projection (8) which engages over the recess (3).

4. Flange connection according to one of the preceding claims, **characterized in that** the respective compensating ring (5, 5`, 5") is formed in one piece.

5. Flange connection (1, 1', 1") according to one of the preceding claims, **characterized in that** the at least one compensating ring (5, 5`, 5") extends, in the radial orientation thereof, to the recess (3) of the flange part (2, 2`) or extends on one side beyond the recess (3) of the flange part (2, 2').

6. Flange connection according to claim 5, **characterized in that** the insulating disk (4) has a larger disk outer diameter than the at least one compensating ring (5, 5`, 5") and comprises through-openings in an outer edge region which projects beyond the respective compensating ring (5, 5`, 5").

7. Flange connection according to either claim 5 or claim 6, **characterized in that** the at least one compensating ring (5, 5`, 5") comprises a projection (8) which is adjacent to the insulating disk (4) and extends in the radial direction of the compensating ring (5, 5`, 5").

8. Method for forming a flange connection according to one of the preceding claims, **characterized in that** the method comprises installing a new flange gasket (10, 10') on a flange connection having two flange parts (2, 2') which are screwed together, wherein at least one of the flange parts (2, 2`) comprises a recess (3) on the side thereof that faces the opposite flange part (2, 2`), and an electrically-insulating old insulating disk which is arranged between the flange parts (2, 2`) in the axial orientation of the flange connection and between the at least one recess (3) in the radial orientation of the flange connection, wherein the flange parts (2, 2`) are spread apart in the axial direction; the old insulating disk is removed; a sealing ring (7) is inserted into an annular groove (6) of at least one compensating ring (5, 5`, 5"); the respective compensating ring (5, 5`, 5"), including the respective sealing ring (7), is placed on the at least one flange part (2) comprising the recess (3), wherein the respective compensating ring (5, 5`, 5"), with the surface thereof, into which the sealing ring (7) is inserted, is placed directly on the flange part (2) at least partially between the recess (3) in the radial orientation of the flange connection, wherein the compensating ring (5, 5`, 5") is inserted into a region within the recess (3), so that the compensating ring (5, 5', 5") abuts an inner side of the recess (3) which is directed to a central axis (M) of the flange connection, and wherein at least one electrically-insulating new insulating disk (4) is inserted between the flange parts (2, 2`), wherein the new insulating disk (4) corresponds to the insulating disk (4) in the preceding claims.

9. Method according to claim 8, **characterized in that** if the two flange parts (2) each comprise the recess (3) on the side thereof that faces the opposite flange part (2), the flange parts (2) are spread apart in the axial direction; the old insulating disk is removed; two compensating rings (5, 5', 5") are used; a sealing ring (7) is inserted into the respective annular groove (6) of the compensating rings (5, 5', 5"); one of the compensating rings (5, 5', 5"), including the respective sealing ring (7), is placed on the flange parts (2), wherein the compensating rings (5, 5', 5"), with the surface thereof, into which the respective sealing ring (7) is inserted, are each placed on the flange parts (2) at least partially between the recesses (3) in the radial orientation of the flange connection (1, 1', 1"); and the new insulating disk (4) is inserted between the flange parts (2).

10. Method according to claim 9, **characterized in that** if the two flange parts (2) each comprise the recess (3) on the side thereof that faces the opposite flange part (2), one of said flange parts (2) is separated after removing the old insulating disk and before inserting the new insulating disk (4), and a new flange part (2`), which does not comprise a recess on the side thereof that faces the opposite flange part (2), is welded in its place; only one compensating ring (5, 5', 5") is used, wherein the sealing ring (7) is inserted into the annular groove (6) of the compensating ring (5, 5', 5"); the compensating ring (5, 5', 5"), including the sealing ring (7), is placed on the flange part (2) comprising the recess (3), wherein the compensating ring (5, 5', 5"), with the surface thereof, into which the sealing ring (7) is inserted, is placed directly on the flange part (2) comprising the recess (3), at least partially between the recess (3) in the radial orientation of the flange connection (1, 1', 1"); and the new insulating disk (4) is inserted between the compensating ring (5, 5', 5") and the flange part (2`) which does not comprise a recess (3) on the side thereof that faces the opposite flange part (2).

## Revendications

1. Liaison par bride (1, 1', 1") comportant deux parties de bride (2, 2') vissées l'une à l'autre, au moins une des parties de bride (2, 2') présentant un retrait (3) sur son côté tourné vers la partie de bride (2, 2') disposée en face, un joint d'étanchéité de bride (10, 10') comportant au moins une bague de compensation (5, 5', 5") étant disposé entre les parties de bride (2, 2'), et la bague de compensation (5, 5', 5") respective présentant dans au moins une de ses surfaces une rainure (6) annulaire dans laquelle est insérée au moins une bague d'étanchéité (7), l'au moins une bague de compensation (5, 5', 5") reposant contre un côté intérieur du retrait (3) orienté vers un axe central (M) de la liaison par bride (1, 1', 1"), **caractérisée en ce que,** dans l'orientation axiale de la liaison par bride (1, 1', 1"), un disque isolant (4) électriquement isolant est disposé entre les parties de bride (2, 2') et la bague de compensation (5, 5', 5") respective est disposée entre le disque isolant (4) et l'au moins une partie de bride (2, 2') présentant le retrait (3), la bague de compensation (5, 5', 5") respective présentant dans sa surface opposée au disque isolant (4) la rainure (6) annulaire dans laquelle est insérée l'au moins une bague d'étanchéité (7).

2. Liaison par bride selon la revendication 1, **caractérisée en ce que** des surfaces des parties de bride (2, 2') tournées l'une vers l'autre présentent des diamètres extérieurs de bride qui sont inférieurs ou égaux à un diamètre extérieur de disque du disque isolant (4) et les parties de bride (2, 2') et le disque isolant (4) présentent respectivement des ouvertures de passage disposées autour de la bague de compensation (5, 5', 5") se trouvant respectivement entre eux et associées les unes aux autres.

3. Liaison par bride selon l'une des revendications précédentes, **caractérisée en ce que** la bague de compensation (5, 5', 5") respective présente respectivement une saillie (8) qui recouvre le retrait (3).

4. Liaison par bride selon l'une des revendications précédentes, **caractérisée en ce que** la bague de compensation (5, 5', 5") respective est formée en une seule pièce.

5. Liaison par bride (1, 1', 1") selon l'une des revendications précédentes, **caractérisée en ce que** l'au moins une bague de compensation (5, 5', 5") s'étend dans son orientation radiale jusqu'au retrait (3) de la partie de bride (2, 2') ou s'étend d'un côté au-delà du retrait (3) de la partie de bride (2, 2').

6. Liaison par bride selon la revendication 5, **caractérisée en ce que** le disque isolant (4) présente un diamètre extérieur de disque plus grand que l'au moins une bague de compensation (5, 5', 5") et des ouvertures de passage dans une zone de bord extérieur dépassant la bague de compensation (5, 5', 5") respective.

7. Liaison par bride selon l'une des revendications 5 ou 6, **caractérisée en ce que** l'au moins une bague de compensation (5, 5', 5") présente une saillie (8) adjacente au disque isolant (4) et s'étendant dans la direction radiale de la bague de compensation (5, 5', 5").

8. Procédé pour la réalisation d'une liaison par bride selon l'une des revendications précédentes, **caractérisé en ce que** le procédé comprend une installation d'une nouveau joint d'étanchéité de bride (10, 10') sur une liaison par bride comportant deux parties de bride (2, 2') vissées l'une à l'autre, au moins l'une des parties de bride (2, 2') présentant un retrait (3) sur son côté tourné vers la partie de bride (2, 2') disposée en face, et un disque isolant usagé, électriquement isolant, disposé dans l'orientation axiale de la liaison par bride entre les parties de brides (2, 2') et dans l'orientation radiale de la liaison par bride entre le au moins un retrait (3), les parties de brides (2, 2') étant écartées l'une de l'autre dans la direction axiale ; le disque isolant usagé étant retiré ; une bague d'étanchéité (7) étant insérée dans une rainure (6) annulaire d'au moins une bague de compensation (5, 5', 5") ; la bague de compensation (5, 5', 5") respective, y compris la bague d'étanchéité (7) respective, étant placée sur l'au moins une partie de bride (2) présentant le retrait (3), la bague de compensation (5, 5', 5") respective étant placée avec sa surface, dans laquelle la bague d'étanchéité (7) respective est insérée, dans l'orientation radiale de la liaison par bride au moins partiellement entre le retrait (3) directement sur la partie de bride (2), la bague de compensation (5, 5', 5") étant insérée dans une zone à l'intérieur du retrait (3), de sorte que la bague de compensation (5, 5', 5") repose contre un côté intérieur du retrait (3) orienté vers un axe central (M) de la liaison par bride, et au moins un nouveau disque isolant (4) électriquement isolant étant inséré entre les parties de bride (2, 2'), le nouveau disque isolant (4) correspondant au disque isolant (4) dans les revendications précédentes.

9. Procédé selon la revendication 8, **caractérisé en ce que,** lorsque les deux parties de bride (2) présentent respectivement le retrait (3) sur leur côté tourné vers la partie de bride (2) disposée en face, les parties de bride (2) sont écartées l'une de l'autre dans la direction axiale ; le disque isolant usagé est retiré ; deux bagues de compensation (5, 5', 5") sont utilisées ; une bague d'étanchéité (7) est respectivement introduite dans la rainure (6) annulaire respective des bagues de compensation (5, 5', 5") ; on place sur les parties de bride (2) respectivement l'une des bagues de compensation (5, 5', 5"), y compris la bague d'étanchéité (7) respective, les bagues de compensation (5, 5', 5") étant placées respectivement avec leur surface, dans laquelle la bague d'étanchéité (7) respective est insérée, dans l'orientation radiale de la liaison par bride (1, 1', 1"), au moins partiellement respectivement entre les retraits (3) sur les parties de bride (2) ; et le nouveau disque isolant (4) est inséré entre les parties de bride (2).

10. Procédé selon la revendication 9, **caractérisé en ce que,** lorsque les deux parties de bride (2) présentent chacune le retrait (3) sur leur côté tourné vers la partie de bride (2) disposé en face, l'une de ces parties de bride (2) est séparée après le retrait du disque isolant usagé et avant l'introduction du nouveau disque isolant (4) et une nouvelle partie de bride (2'), qui ne présente pas de retrait sur son côté tourné vers la partie de bride (2) disposée en face, est soudée à sa place ; une seule bague de compensation (5, 5', 5") est utilisée, la bague d'étanchéité (7) étant introduite dans la rainure (6) annulaire de la bague de compensation (5, 5', 5") ; la bague de compensation (5, 5', 5"), y compris la bague d'étanchéité (7), étant placée sur la partie de bride (2) présentant le retrait (3), la bague de compensation (5, 5', 5") étant placée avec sa surface, dans laquelle la bague d'étanchéité (7) est insérée, dans l'orientation radiale de la liaison par bride (1, 1', 1"), au moins partiellement entre le retrait (3) directement sur la partie de bride (2) présentant le retrait (3) ; et le nouveau disque isolant (4) est inséré entre la bague de compensation (5, 5', 5") et la partie de bride (2') qui ne présente pas de retrait (3) sur son côté tourné vers la partie de bride (2) disposée en face.
